# EUROPEAN PATENT SPECIFICATION

(11) **EP 2 401 899 B1**
(45) Date of publication and mention of the grant of the patent: **23.03.2016**
(21) Application number: 11167747.2
(22) Date of filing: 26.05.2011
(51) Int. Cl.: A01B 33/00, A01B 33/02

(54) **Agricultural implement**
Landwirtschaftliches Gerät
Outil agricole

(30) Priority: 02.07.2010 GB 201011181
(43) Date of publication of application: 04.01.2012
(73) Proprietor: George Moate Limited, Felthorpe Norwich Norfolk NR10 4BT (GB)
(72) Inventor: Moate, George, Doncaster, South Yorkshire DN5 7DF (GB)
(74) Representative: ip21 Ltd

(56) References cited:
- WO-A2-00/03583
- DE-A1- 1 933 500
- DE-C- 440 230
- FR-A1- 2 291 693

## Description

This invention relates to an agricultural implement and particularly, but not exclusively, to a rotary cultivator suitable for removing or reducing the quantity of stones present in topsoil.

It is common practice to prepare soil beds before planting crops such as root vegetables or the like. Preparation of soil beds typically involves cultivating or tilling the soil using a device such as a tractor-mounted rotary cultivator. Using a rotary cultivator stirs the top layer of soil and in the process both removes weeds from the soil before a new crop is planted, and loosens and aerates the soil.

In addition to loosening and aerating the soil when preparing a bed, it would be advantageous for stones to be removed from the bed, and for large clods of earth to be broken down into smaller particles. The presence of stones in soil can cause large clods of hardened soil to form, and may affect the absorption of infiltration of water into the soil. The presence of stones may also adversely affect machinery used when tending the soil, by clogging or damaging the machinery. Therefore, it is beneficial for the quantity of stones present in the topsoil to be reduced.

WO 00/03583 and GB 1537912 disclose a soil-working implement having a series of hoes rotating about a horizontal axis, with a grid to the rear. The hoes rotate in the opposite direction to the direction of travel.

According to a first aspect of the invention we provide an agricultural implement, as set forth in claim 1.

The grinding formation may comprise a plurality of grinding elements, each grinding element including an elongate rod and a plurality of grinding plates, the grinding plates being supported on and fixed for rotation with the rod.

The plurality of grinding plates of each grinding element may be spaced approximately evenly along the length of the rod.

The grinding elements may be disposed generally parallel to one another.

The separation distance between each pair of adjacent grinding plates of a grinding element may be greater than the width of each grinding plate, and for each pair of adjacent grinding elements, the grinding plates of a first of the pair of adjacent pairs of grinding elements may be positioned so as to overlap alternately with the grinding plates of the other of the pair of grinding elements.

The support part may be adapted for attachment to a vehicle.

Power may be transmitted to the rotor from the vehicle, to provide rotation of the rotor, and hydraulic power may be transmitted to the grinding elements from the vehicle, to provide rotation of the rod of each grinding element about its longitudinal axis.

The filter part may include a plurality of filter elements, each comprising at least one elongate finger.

The filter elements may be supported on the support part such that they are disposed in a generally upright configuration, wherein the fingers are spaced apart from one another so as to form a grill.

Each filter element may comprise an elongate metallic bar that is twisted at its midpoint through approximately 540 degrees so as to provide a resiliently deformable structure comprising a sprung finger.

The angle of the filter elements relative to the support part may be adjustable.

The spacing of the filter elements relative to one another may be adjustable.

The distance of separation between the filter part and grinding formation may be adjustable.

The position of the grinding elements relative to the support part may be adjustable.

The implement may further include a roller that is supported on and rotatable relative to the support part, and which is disposed generally parallel to the rotor.

Hydraulic power may be transmitted to the roller from the vehicle, to allow rotation of the roller about its longitudinal axis.

A breaking formation may be provided on the support part, the breaking formation including a bar which lies generally parallel and in close proximity to the rotor.

The implement may further include a bed-forming formation having a first and second edge-forming wall, and a smoothing plate, the bed-forming part being supported on the support part.

The invention will now be described by way of example only with reference to the accompanying drawings, wherein:
Figure 1 is a perspective view of the agricultural implement according to the invention,
Figure 2 is a side view of the implement, and
Figure 3 is a perspective view of a part of the implement.
Figure 4 is an enlarged perspective view of part of the implement, from approximately the same viewpoint as that of figure 3.
Figure 4a is a diagrammatic view from above showing the relative disposition of the parts in figure 4.

With reference to the drawings, an agricultural implement 10 is shown, which has a support part (indicated generally at 12), a rotor (indicated at 36) supported on the support part 12, a grinding formation 34 and a filter part 32.

The support part 12 includes a pair of side walls 20 and a support surface 16 lying between the side walls 20. A connection formation (shown generally at 18) is provided on the support surface 16, to enable the implement to be connected to a vehicle such as a tractor.

A rotor 36 is connected to the support part 12 at either end, each end being supported by-a suitable bearing on a respective side wall 20. The rotor 36 includes a number of blades 36a extending generally outwardly from its central axis. A power connection (not shown) is provided on the implement, which in this example, in use is connected to a power take off provided on the vehicle to which it is attached, for rotational driving of the rotor.

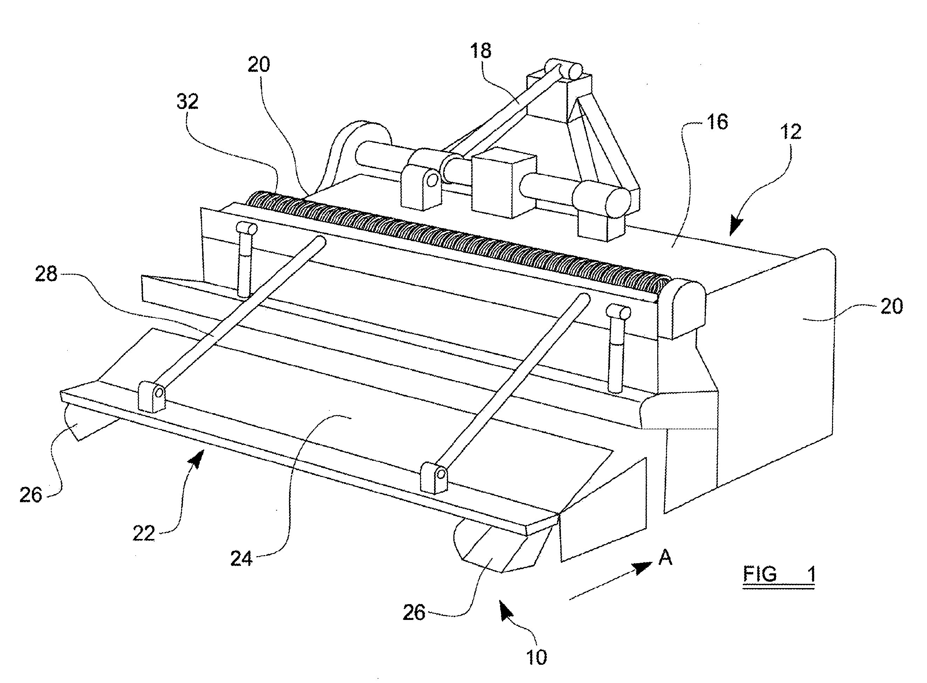

During operation the implement 10 is towed by the vehicle to which it is connected by the connection formation 18, so that it moves in a direction as indicated at A in Figure 1. The rotor 36 rotates "against" the forward direction of the vehicle, so that the forward-most blades of the rotor (i.e. those in closest proximity to the vehicle towing the implement 10) move upwardly. In use, where the implement is operated on a layer of soil in a field, the action of the rotor causes soil to be lifted on the blades of the rotor 36 and/or pushed away from the implement in the direction of travel A. Soil (including stones and other debris present in the soil) that is not lifted by the blades is instead pushed in front of the implement, and is subsequently either pushed down beneath the rotor as the implement passes over it, or else is again contacted by a blade and lifted from the ground. This ensures that any soil or debris that is not lifted by the blade, and therefore is not processed by the implement, is buried below the layer of topsoil.

A filter part 32 and grinding formation 34 are supported on the support part 12, such that the filter part 32 is disposed between the grinding formation 34 and the rotor 36. Soil and debris that is lifted by the blades of the rotor 36 is rotated towards the filter part 32. Large particles in the soil (such as large clods of soil, or large stones) are prevented from passing through the filter part 32, and fall back onto the blades of the rotor 36, to be lifted again. A breaking bar (not shown) is disposed between the side walls 20 of the support part 12, and lies generally parallel and in close proximity to the rotor 36. As large particles are lifted by the rotor blades, they are brought into contact with the breaking bar, which in turn causes large clods of soil to be broken down into smaller particles, which are likely to be able to pass through the filter part 32. Large stones may not be broken down by the breaking bar, but are instead knocked back into the soil, to be pushed down into the ground as the rotor passes over them.

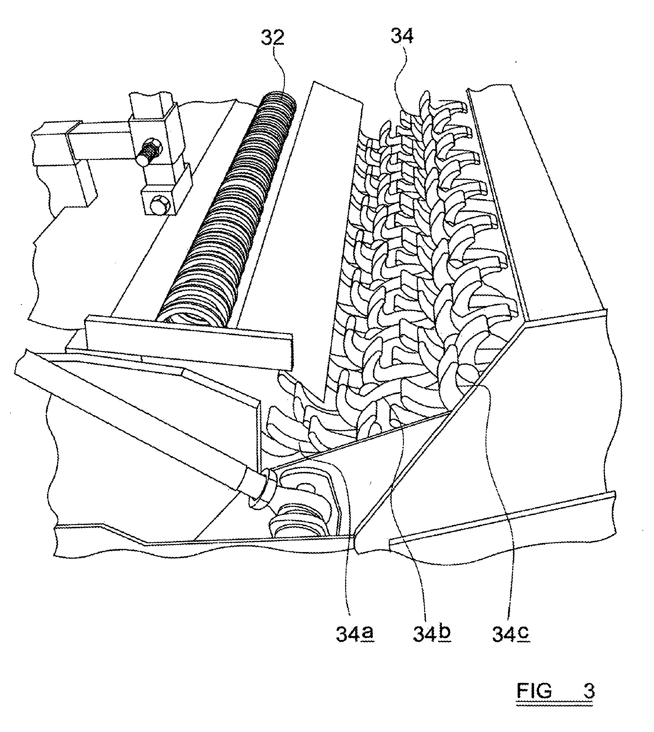

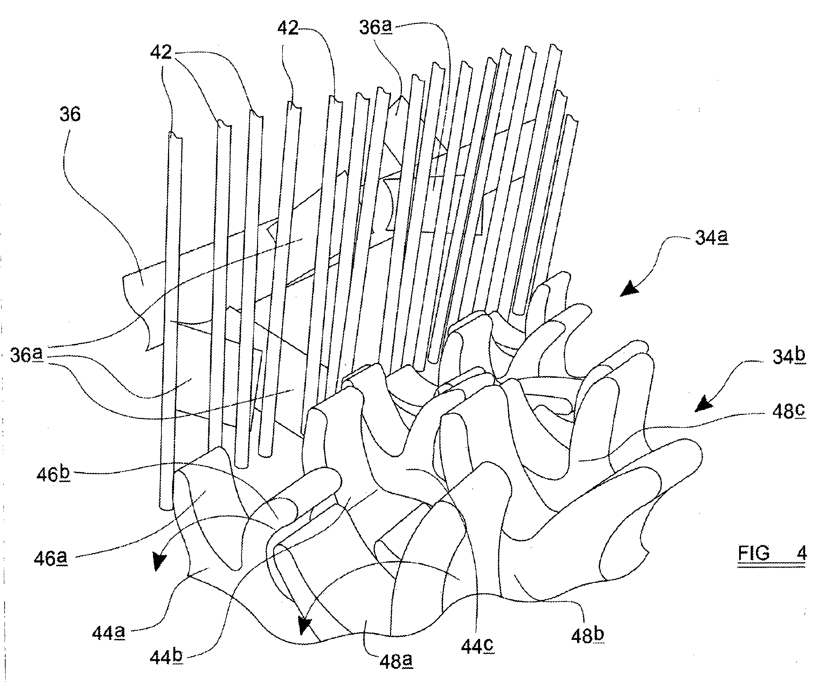

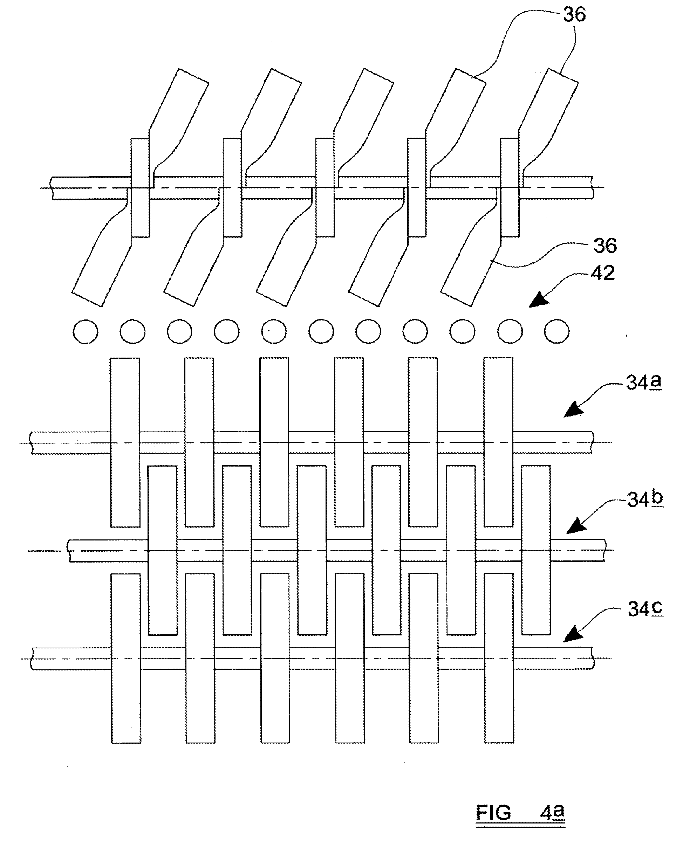

The filter part 32, as is shown in Figure 3, includes a plurality of filter elements, each comprising an elongate metallic bar that is twisted at its midpoint through approximately 540 degrees so as to provide a resiliently deformable structure comprising a sprung finger. The fingers typically have a diameter of approximately 12mm, and are held in a generally upright position and are spaced apart from one another, so as to form a grill. Preferably, the spacing between filter elements is 28 to 35mm, and this may be adjusted to alter the size of particles able to pass through the filter part and into the grinding formation 34. Such fingers are shown at 42 in figures 4 and 4a, which also show the rotor 36 with its blades 36a.

The angle of the filter elements relative to the support part 12 is adjustable. The angle may be adjusted, for example where the implement operates in areas with a high concentration of stones present in the soil, so that the filter elements extend downwardly away from the direction of motion of the implement, so that large particles or stones that do not pass between the filter elements are directed back towards the rotor. These large particles, which have not passed into the grinding formation 34, fall down to the ground between the rotor 36 and a powered roller comprising a square shaft 38. The roller 38 is driven by a hydraulic connection, provided from the vehicle, and acts to push these large particles and stones down into the ground, so that they do not form a part of the topsoil prepared by the implement. The direction of rotation of the roller 38 is in a direction opposite to that of the rotor 36.

The distance of separation between the filter part 32 and grinding formation 34 is adjustable by moving the filter part towards or away from the rotor 36, or by moving the grinding formation away from the filter part.

The grinding 34 formation includes a plurality of grinding elements 34a-34c, each grinding element including an elongate rod and a plurality of grinding plates, the grinding plates being supported on and fixed for rotation with the rod. The grinding plates of each grinding element 34a-34c are spaced approximately evenly along the length of the rod, and the rods of the respective grinding elements are supported between the walls 20 of the support part 12, such that they lie across the width of the implement, and are disposed generally parallel to one another. The separation distance between each pair of adjacent grinding plates of a grinding element is greater than the width of each grinding plate. The grinding plates of the first grinding element 34a are positioned so as to overlap alternately with the grinding plates of the second grinding element 34b, and the grinding plates of the second grinding element 34b are positioned so that they overlap alternately with the grinding plates of the third grinding element 34c. Whilst the current embodiment of the invention includes three rows of grinding elements, it should be understood that any number of grinding elements could be provided.

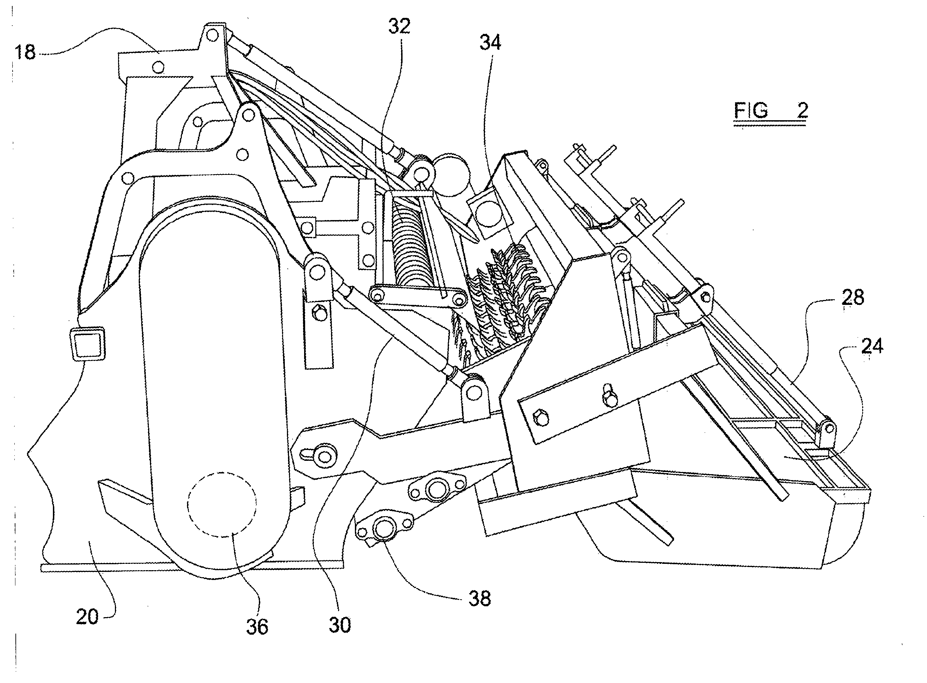

The grinding plates are generally "star-shaped" in cross-section (viewing the plates along the longitudinal axis of the rod of the grinding element). Each grinding plate has a plurality of arms which extend outwardly from the centre of the plate, the tip of each of the arms being circumferentially-displaced in a common direction, so that each arm is curved. The concave faces of the uppermost arms face away from the filter part 32 in a direction opposite to that of the movement of the implement (i.e. in the opposite direction to A). The rods and connected grinding plates rotate such that the convex face of each arm is the leading face of rotation. In other words, each grinding element rotates in an anti-clockwise direction as viewed in Figure 2, the grinding plates of each grinding element 34a-34c being attached to the respective rod of that grinding element rod, and the rod being hydraulically driven to rotate it. The rotational drive may be supplied to each rod through a chain-driven connection with the rotor 36. The grinding elements 34a - 34c and square shaft 38 all rotate in the same direction and have a common drive.

Figure 4 shows the first grinding element 34a behind the filter element fingers 42 of the filter part 32 and the second grinding element 34b behind the element 34a. Figure 4a additionally shows the third grinding element 34c.

Some of the grinding plates on the grinding element 34a are seen at 44a, 44b, 44c, etc., spaced from one another lengthwise of the grinding element by slightly more than the thickness of each grinding plate. Two of their outwardly extending arms are indicated at 46a, 46b for the plate 44a, together with their convex leading faces and concave trailing faces with respect to the indicated direction of rotation. Similarly adjacent spaced grinding plates on the grinding element 34b are seen at 48a, 48b, 48c, whose arms extend into the spaces between adjacent grinding plates 44a, 44b, 44c of the grinding element 34a. Hence, in use with the grinding elements rotating in the indicated directions, the forwardmost arms of the plates 48a, 48b, 48c pass downwardly between the upwardly-moving rearmost arms of the plates 44a, 44b, 44c, etc.

In use, as soil and debris is passed through the filter part 32, it comes into contact with the grinding formation 34. Large clods of soil and stones cannot pass between the fingers of the filter elements, and therefore cannot reach the grinding formation 34. They fall into the void created by the rotor and are effectively buried. Smaller clods of soil, and stones, land on the rotating grinding elements 34b, 34b 34c.

As the grinding plates rotate on their respective rods, particles which are larger in diameter than the width of a grinding plate are broken down into smaller particles by the relative movements in opposite directions of the arms of plates of alternate grinding elements. If the rearmost arms of the grinding plates on the grinding elements 34a are moving upwardly, the overlapping arms of the grinding plates 34b behind the downwardly move upwardly. Particles that lie wholly within the width of the plates 34a are rotated until they fall down below the grinding formation 34, to lie on the ground beneath the implement, and form a layer of topsoil. Small clods are brought back to the rotor for re-chopping.

It is possible for small stones to enter the grinding formation 34, and these may become lodged between the grinding elements. The ends of the rods of each grinding element are held in a spring-loaded formation so as to allow a degree of movement in the position of the end of the rod in relation to the wall 20 of the support part 12. This freedom of movement allows the rods of the grinding elements to move relative to one another, to allow stones to pass between the grinding plates of the respective grinding elements, to avoid a jam occurring in the grinding formation 34.

As soil passes over, or through, the grinding formation, the soil falls to the ground below the implement 10. As the implement continues to move forward, in the direction indicated at A in Figure 1, the soil deposited below the implement comes into contact with a bed-forming formation (shown generally at 22). The bed-forming formation includes a first and second edge-forming wall 26, and a smoothing plate 24, and is supported on the support part 12. The angle and position of the smoothing plate 24 relative to the support part 12 is adjustable. By lowering the smoothing plate 24, the level of topsoil is lowered, as the smoothing plate 24 pushes against excess soil that is piled high beneath the implement, to create a smooth top layer of soil as the machine passes the soil. The edge-forming walls 26 keep the soil within a boundary defined by the width of the space between the walls, shaping the processed topsoil into a bed of predefined width. Typically a topsoil bed is created with a width of 1.8m.

The embodiments shown in the present drawings comprises an implement operable to prepare a single bed, but it may be desirable in terms of improved efficiency or reduced operating time to provide an implement able to prepare a wide bed or multiple beds simultaneously. GB2378632 describes a three-bed tilling implement, wherein in use two parts are aligned end-to-end so as to form an extended tilling device, and when not in use the outer parts are moveable to an upright position so that the width of the implement is reduced. It would be apparent to a skilled reader that the general structure of the three-bed tilling apparatus could be used to support the implement of the current invention. Alternatively, a three-bed apparatus may be provided where two implements are provided as supported on either side of a frame for attaching to a tractor, and a third implement is supported rearwardly of the frame and the first two implements. In this way, each bed is prepared by a separate implement 10 as described herein.

It will be apparent to those skilled in the art that the features of the agricultural implement as described above may configured in alternative ways so as to achieve a similar effect. Furthermore, the features of the invention may be applied to other forms of known agricultural vehicle or implement, such as the three-bed tilling implement described in patent GB2378632.

## Claims

1. An agricultural implement, including:
a support part (12),
a rotor (36) supported on and rotatable relative to the support part (12), the rotor (36) including one or more blades (36a), the rotor, in use, rotating about its longitudinal axis such that the forward-most blade (36a) of the rotor (36) moves upwardly;
and
a filter part (32);
**characterised by** a grinding formation (34) supported on the support part (12), and in that the filter part (32) is disposed between the rotor (36) and the grinding formation (34), so that during operation the rotor (36) causes soil to be fitted and passed through the filter part (32) to land on the grinding formation (34).

2. An agricultural implement according to claim 1, further **characterised in that** the grinding formation (34) comprises a plurality of grinding elements (34a, 34b, 34c), each grinding element including an elongate rod and a plurality of grinding plates (44a, 44b, 44c, 48a, 48b, 48c), the grinding plates (44a, 44b, 44c, 48a, 48b, 48c) being supported on and fixed for rotation with the rod.

3. An agricultural implement according to claim 2, further **characterised in that** the grinding plates (44a, 44b, 44c, 48a, 48b, 48c) of each grinding element comprise generally star-shaped elements having arms extending outwardly from the centre of the plate, the arms having tips circumferentially displaced in a common direction so each arm is curved.

4. An agricultural implement according to claim 2 or claim 3, further **characterised in that** the grinding elements (34a, 34b, 34c), are disposed generally parallel to one another.

5. An agricultural implement according to claim 4, further **characterised in that** the separation distance between each pair of adjacent grinding plates (44a, 44b, 44c, 48a, 48b, 48c), of a grinding element (34a, 34b, 34c), is greater than the width of each grinding plate (44a, 44b, 44c, 48a, 48b, 48c), and wherein for each pair of adjacent grinding elements (34a, 34b, 34c), the grinding plates (44a, 44b, 44c, 48a, 48b, 48c), of a first of the pair of adjacent pairs of grinding elements (34a, 34b, 34c), are positioned so as to overlap alternately with the grinding plates (44a, 44b, 44c, 48a, 48b, 48c) of the other of the pair of grinding elements (34a, 34b, 34c).

6. An agricultural implement according to claim 2, further **characterised in that** hydraulic power is transmitted to the grinding elements (34a, 34b, 34c) from the vehicle, to provide rotation of the rod of each grinding element (34a, 34b, 34c) about its longitudinal axis.

7. An agricultural implement according to any of the preceding claims, further **characterised in that** each filter element comprises an elongate metallic bar that is twisted at its midpoint through approximately 540 degrees so as to provide a resiliently deformable structure comprising a sprung finger (42).

8. An agricultural implement according to claim 7, further **characterised in that** the angle of the filter elements relative to the support part (12) is adjustable.

9. An agricultural implement according to claims 7 or 8, further **characterised in that** the spacing of the filter elements relative to one another is adjustable.

10. An agricultural implement according to any one of the preceding claims, further **characterised in that** the distance of separation between the filter part (32) and grinding formation (34) is adjustable.

11. An agricultural implement according to any one of claims 2 to 10, further **characterised in that** the position of the grinding elements (34a, 34b, 34c) relative to the support part (12) is adjustable.

12. An agricultural implement according to any one of the preceding claims, further **characterised by** a roller (38) that is supported on and rotatable relative to the support part (12), and which is disposed generally parallel to the rotor (36).

13. An agricultural implement according to claim12, further **characterised in that** hydraulic power is transmitted to the roller (38) from the vehicle, to allow rotation of the roller (38) about its longitudinal axis.

14. An agricultural implement according to any one of the preceding claims, further **characterised in that** a breaking formation is provided on the support part (12), the breaking formation including a bar which lies generally parallel and in close proximity to the rotor.

15. An agricultural implement according to any one of the preceding claims, further **characterised by** a bed-forming formation (22) having a first and second edge-forming wall (26), and a smoothing plate (24), the bed-forming part (22) being supported on the support part (12).

## Patentansprüche

1. Landwirtschaftliches Gerät, enthaltend:
einen Trägerteil (12),
einen Rotor (36), der an dem Trägerteil (12) befestigt und im Verhältnis zu dem Trägerteil (12) drehbar ist, der Rotor (36) enthaltend eine oder mehrere Klingen (36a), wobei sich der Rotor beim Gebrauch um dessen Längsachse dreht, sodass sich die am Weitesten vorn gelegene Klinge (36a) nach oben bewegt;
und
einen Filterteil (32),
**gekennzeichnet durch** eine an dem Trägerteil (12) befestigte Mahlformation (34) und **dadurch**, dass der Filterteil (32) zwischen dem Rotor (36) und der Mahlformation (34) angeordnet ist, sodass der Rotor (36) während des Betriebs bewirkt, dass Boden angehoben und **durch** den Filterteil (32) geleitet wird, um auf der Mahlformation (34) zu landen.

2. Landwirtschaftliches Gerät gemäß Anspruch 1, des Weiteren **dadurch gekennzeichnet, dass** die Mahlformation (34) eine Mehrzahl von Mahlelementen (34a, 34b, 34c) umfasst, wobei jedes Mahlelement eine lange Stange und eine Mehrzahl von Mahlplatten (44a, 44b, 44c, 48a, 48b, 48c) enthält, wobei die Mahlplatten (44a, 44b, 44c, 48a, 48b, 48c) an der Stange befestigt und unbeweglich sind, um sich mit der Stange zu drehen.

3. Landwirtschaftliches Gerät gemäß Anspruch 2, des Weiteren **dadurch gekennzeichnet, dass** die Mahlplatten (44a, 44b, 44c, 48a, 48b, 48c) jedes Mahlelements aus im Allgemeinen sternförmigen Elementen bestehen, die Arme aufweisen, welche ausgehend vom Zentrum der Platte nach außen verlaufen, wobei die Arme Spitzen aufweisen, die auf dem Umfang in einer gemeinsamen Richtung versetzt sind, sodass jeder Arm gebogen ist.

4. Landwirtschaftliches Gerät gemäß Anspruch 2 oder Anspruch 3, des Weiteren **dadurch gekennzeichnet, dass** die Mahlelemente (34a, 34b, 34c) im Allgemeinen parallel zueinander angeordnet sind.

5. Landwirtschaftliches Gerät gemäß Anspruch 4, des Weiteren **dadurch gekennzeichnet, dass** der Trennungsabstand zwischen jedem Paar benachbarter Mahlplatten (44a, 44b, 44c, 48a, 48b, 48c) eines Mahlelements (34a, 34b, 34c) größer ist als die Breite jeder Mahlplatte (44a, 44b, 44c, 48a, 48b, 48c) und wobei für jedes Paar benachbarter Mahlelemente (34a, 34b, 34c) die Mahlplatten (44a, 44b, 44c, 48a, 48b, 48c) eines ersten des Paars benachbarter Mahlelemente (34a, 34b, 34c) so positioniert sind, dass sie abwechselnd die Mahlplatten (44a, 44b, 44c, 48a, 48b, 48c) des anderen des Paars von Mahlelementen (34a, 34b, 34c) überlappen.

6. Landwirtschaftliches Gerät gemäß Anspruch 2, des Weiteren **dadurch gekennzeichnet, dass** Hydraulikkraft vom Fahrzeug zu den Mahlelementen (34a, 34b, 34c) übertragen wird, um für die Drehung des Stabs von jedem Mahlelement (34a, 34b, 34c) um dessen Längsachse zu sorgen.

7. Landwirtschaftliches Gerät gemäß einem der vorherigen Ansprüche, des Weiteren **dadurch gekennzeichnet, dass** jedes Filterelement eine lange Metallschiene umfasst, die an ihrem Mittelpunkt um ungefähr 540 Grad verdreht ist, um eine elastisch verformbare Struktur bereitzustellen, die aus einem abgefederten Finger (42) besteht.

8. Landwirtschaftliches Gerät gemäß Anspruch 7, des Weiteren **dadurch gekennzeichnet, dass** der Winkel der Filterelemente im Verhältnis zum Trägerteil (12) einstellbar ist.

9. Landwirtschaftliches Gerät gemäß den Ansprüchen 7 oder 8, des Weiteren **dadurch gekennzeichnet, dass** der Abstand der Filterelemente im Verhältnis zueinander einstellbar ist.

10. Landwirtschaftliches Gerät gemäß einem der vorherigen Ansprüche, des Weiteren **dadurch gekennzeichnet, dass** der Trennungsabstand zwischen dem Filterteil (32) und der Mahlformation (34) einstellbar ist.

11. Landwirtschaftliches Gerät gemäß einem der Ansprüche 2 bis 10, des Weiteren **dadurch gekennzeichnet, dass** die Position der Mahlelemente (34a, 34b, 34c) im Verhältnis zum Trägerteil (12) einstellbar ist.

12. Landwirtschaftliches Gerät gemäß einem der vorherigen Ansprüche, des Weiteren **gekennzeichnet durch** eine Walze (38), die an dem Trägerteil (12) befestigt und im Verhältnis zu diesem drehbar ist und die im Allgemeinen parallel zum Rotor (36) angeordnet ist.

13. Landwirtschaftliches Gerät gemäß Anspruch 12, des Weiteren **dadurch gekennzeichnet, dass** Hydraulikkraft vom Fahrzeug zu der Walze (38) übertragen wird, um die Drehung der Walze (38) um deren Längsachse zu ermöglichen.

14. Landwirtschaftliches Gerät gemäß einem der vorherigen Ansprüche, des Weiteren **dadurch gekennzeichnet, dass** eine Brechformation an dem Trägerteil (12) vorgesehen ist, wobei die Brechformation eine Schiene enthält, die im Allgemeinen parallel und in unmittelbarer Nähe zum Rotor liegt.

15. Landwirtschaftliches Gerät gemäß einem der vorherigen Ansprüche, des Weiteren **gekennzeichnet durch** eine Häuflerformation (22) mit einer ersten und zweiten kantenbildenden Wand (26) und einer Glättungsplatte (24), wobei der Häuflerteil (22) an dem Trägerteil (12) befestigt ist.

## Revendications

1. Un outil agricole, incluant :
une partie de soutien (12),
un rotor (36) soutenu sur et rotatif relativement à la partie de soutien (12), le rotor (36) incluant une ou plusieurs lames (36a), le rotor, lors de l'utilisation, tournant sur son axe longitudinal de telle sorte que la lame la plus en avant (36a) du rotor (36) se déplace vers le haut ;
et
une partie de filtre (32) ;
**caractérisé par** une formation de broyage (34) soutenue sur la partie de soutien (12), et en ce que la partie de filtre (32) est disposée entre le rotor (36) et la formation de broyage (34), de sorte que durant le fonctionnement le rotor (36) amène la terre à être soulevée et passée à travers la partie de filtre (32) pour atterrir sur la formation de broyage (34).

2. Un outil agricole selon la revendication 1, **caractérisé en outre en ce que** la formation de broyage (34) comprend une pluralité d'éléments de broyage (34a, 34b, 34c), chaque élément de broyage incluant une tige allongée et une pluralité de plaques de broyage (44a, 44b, 44c, 48a, 48b, 48c), les plaques de broyage (44a, 44b, 44c, 48a, 48b, 48c) étant soutenues sur et fixées pour une rotation avec la tige.

3. Un outil agricole selon la revendication 2, **caractérisé en outre en ce que** les plaques de broyage (44a, 44b, 44c, 48a, 48b, 48c) de chaque élément de broyage comprennent des éléments en forme généralement étoilée ayant des bras s'étendant vers l'extérieur à partir du centre de la plaque, les bras ayant des extrémités déplacées de façon circonférentielle dans une direction commune pour que chaque bras soit courbé.

4. Un outil agricole selon la revendication 2 ou la revendication 3, **caractérisé en outre en ce que** les éléments de broyage (34a, 34b, 34c) sont disposés de façon généralement parallèle les uns aux autres.

5. Un outil agricole selon la revendication 4, **caractérisé en outre en ce que** la distance de séparation entre chaque paire de plaques de broyage adjacentes (44a, 44b, 44c, 48a, 48b, 48c), d'un élément de broyage (34a, 34b, 34c), est plus grande que la largeur de chaque plaque de broyage (44a, 44b, 44c, 48a, 48b, 48c), et où pour chaque paire d'éléments de broyage adjacents (34a, 34b, 34c), les plaques de broyage (44a, 44b, 44c, 48a, 48b, 48c) d'une première paire parmi les paires adjacentes d'éléments de broyage (34a, 34b, 34c) sont positionnées de manière à se chevaucher de façon alternée avec les plaques de broyage (44a, 44b, 44c, 48a, 48b, 48c) de l'autre paire parmi les paires d'éléments de broyage (34a, 34b, 34c).

6. Un outil agricole selon la revendication 2, **caractérisé en outre en ce que** de la puissance hydraulique est transmise aux éléments de broyage (34a, 34b, 34c) depuis le véhicule, pour fournir une rotation de la tige de chaque élément de broyage (34a, 34b, 34c) sur son axe longitudinal.

7. Un outil agricole selon n'importe lesquelles des revendications précédentes, **caractérisé en outre en ce que** chaque élément de filtre comprend une barre métallique allongée qui est tordue au niveau de son point milieu d'approximativement 540 degrés de manière à fournir une structure déformable de façon résiliente comprenant un doigt élastique (42).

8. Un outil agricole selon la revendication 7, **caractérisé en outre en ce que** l'angle des éléments de filtre relativement à la partie de soutien (12) est réglable.

9. Un outil agricole selon la revendication 7 ou la revendication 8, **caractérisé en outre en ce que** l'espacement des éléments de filtre relativement les uns aux autres est réglable.

10. Un outil agricole selon l'une quelconque des revendications précédentes, **caractérisé en outre en ce que** la distance de séparation entre la partie de filtre (32) et la formation de broyage (34) est réglable.

11. Un outil agricole selon l'une quelconque des revendications 2 à 10, **caractérisé en outre en ce que** la position des éléments de broyage (34a, 34b, 34c) relativement à la partie de soutien (12) est réglable.

12. Un outil agricole selon l'une quelconque des revendications précédentes, **caractérisé en outre par** un rouleau (38) qui est soutenu sur et rotatif relativement à la partie de soutien (12), et qui est disposé de façon généralement parallèle au rotor (36).

13. Un outil agricole selon la revendication 12, **caractérisé en outre en ce que** de la puissance hydraulique est transmise au rouleau (38) depuis le véhicule, pour permettre la rotation du rouleau (38) sur son axe longitudinal.

14. Un outil agricole selon l'une quelconque des revendications précédentes, **caractérisé en outre en ce qu'**une formation de rupture est fournie sur la partie de soutien (12), la formation de rupture incluant une barre qui repose de façon généralement parallèle au et à étroite proximité du rotor.

15. Un outil agricole selon l'une quelconque des revendications précédentes, **caractérisé en outre par** une formation formant un lit (22) ayant une première et une deuxième paroi formant un bord (26), une plaque de lissage (24), la partie formant un lit (22) étant soutenue sur la partie de soutien (12).
